# EUROPÄISCHE PATENTANMELDUNG

(11) **EP 0 761 293 A1**
(43) Veröffentlichungstag der Anmeldung: **12.03.1997**
(21) Anmeldenummer: 96111410.5
(22) Anmeldetag: 16.07.1996
(51) Int. Cl.: B01D 71/64, B01D 69/06, B01D 69/08, B01D 69/12, B01D 53/22, B01D 61/00

(54) **Polyetherimidmembran**

(30) Priorität: 04.08.1995 DE 19528706
(71) Anmelder: HOECHST AKTIENGESELLSCHAFT, 65926 Frankfurt am Main (DE)
(72) Erfinder: Scheunemann, Ude, Dr., 65835 Liederbach (DE); Appel, Gunther, Dr., 65795 Hattersheim (DE); Blatter, Karsten, Dr., 65817 Eppstein (DE)

(57) **Zusammenfassung**

Membran mit einer Trennschicht aus einem Polyimid, welches 50 bis 100 Gew.% der wiederkehrenden Einheiten (A)
(Formel mit Hand korrigiert) 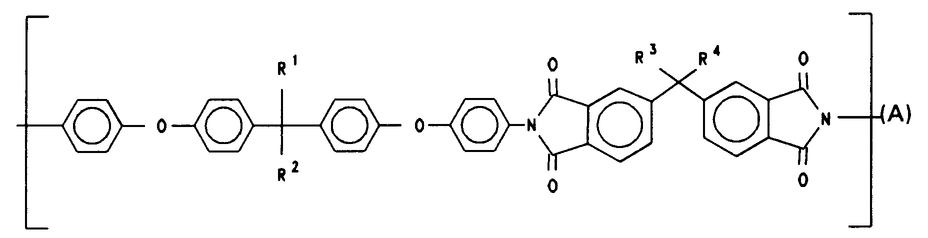 wobei R¹, R², R³ und R⁴ unabhängig voneinander für H oder einen CH₃, CF₃ oder CₙH₂ₙ₊₁-Rest stehen mit n<10
und
0 bis 50 Gew.% der wiederkehrenden Einheiten (B) 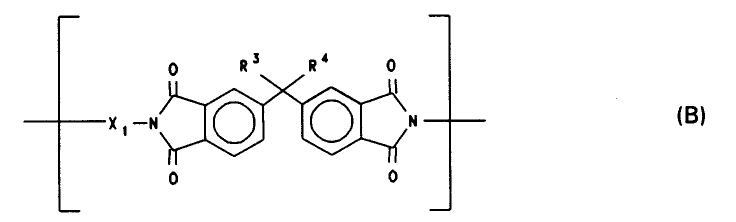 wobei X₁ für m-Phenylen, p-Phenylen oder für eine der folgenden gruppen steht 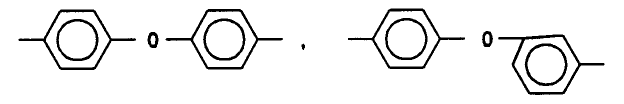 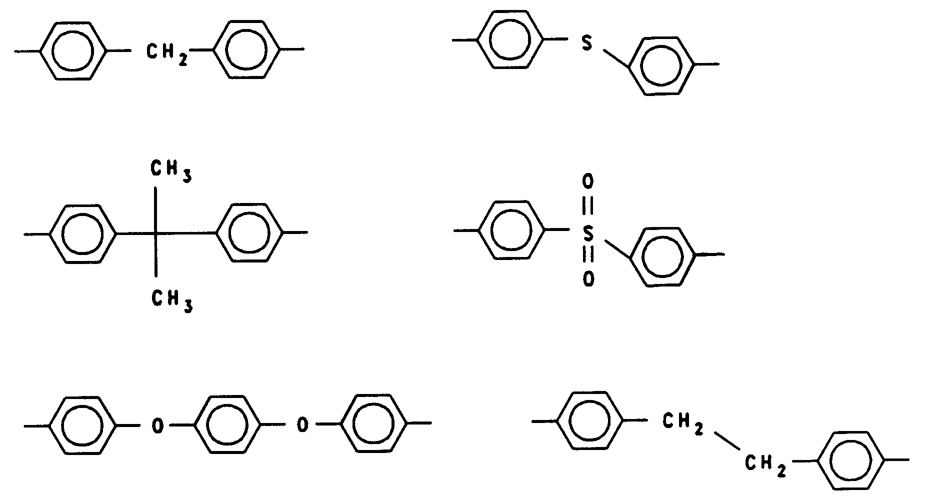 enthält.
Die Membran kann gegebenenfalls zusätzlich zu den Einheiten der Formeln (A) und (B) weitere Diamin- und/oder Säureeinheiten enthalten und besteht insbesondere aus einer Trennschicht, einer defektfreien hochpermeablen Zwischenschicht und einer Trägerschicht. Der Trennfaktor Sauerstoff/Stickstoff liegt vorzugsweise im Bereich von 5,5 bis 10.

## Beschreibung

Verfahren zur Trennung Von Mehrstoffsystemen mittels Membranen haben in den letzten Jahren an Bedeutung gewonnen. Dies gilt auch für nichtporöse Membranen, bei denen der Stofftransport durch unterschiedliches chemisches Potential zwischen Feed- und Permeatraum bewirkt wird. Nichtporöse Membranen finden in vielen technischen Bereichen Anwendung wie z.B. Dialyse, Umkehrosmose, Pervaporation, Dampfpermeation oder Gastrennung. Membranen zur Gastrennung werden z.B. zur Sauerstoffanreicherung von Luft, zur Trennung von Methan und Kohlendioxid oder zur Stickstoffgewinnung aus Luft verwendet.

Die Gasseparation mit Membranen bietet grundsätzlich vielversprechende Aussichten. Verglichen mit klassischen Gastrennverfahren wie Kryogendestillation und Sorptionsverfahren kann die Gastrennung mit Membranen mit deutlich weniger Energieeinsatz betrieben und isotherm ohne Phasenwechsel durchgeführt werden.

Die Membraneigenschaften bilden einen wesentlichen Kostenfaktor bei diesem Trennverfahren. Wünschenswert sind Membranen mit hoher Selektivität, da für die Wirtschaftlichkeit der meisten Trennprozesse die Selektivität von äußerster Wichtigkeit ist. Insbesondere bei der technisch wichtigen Stickstoffgewinnung aus Luft ist man bestrebt Membranen mit hoher Selektivität zwischen Stickstoff und Sauerstoff einzusetzen (R. Prasad et al., Journal of Membrane Science 94 (1994) 225-248).

Weiterhin ist es sehr wichtig, daß die Durchlässigkeit der Membran für die bevorzugt permeierende Gaskomponente möglichst groß ist. Je größer der Gasfluß pro Flächen- und Zeiteinheit wird, umso wirtschaftlicher ist der Trennprozeß. Die Selektivität ist eine Materialeigenschaft, während die Durchlässigkeit der Membran durch Permeationskoeffizient und Schichtdicke bestimmt wird. Ein prinzipielles Problem bei der Auswahl geeigneter Materialien für Membranen ist, daß man häufig ein gegenläufiges Verhältnis von Permeationskoeffizienten und Selektivität findet. Materialien mit hoher Selektivität haben nur geringe Permeationskoeffizienten, andere haben hohe Permeationskoeffizienten bei geringer Selektivität. Für die Herstellung von Membranen mit hoher Durchlässigkeit kommt es darauf an, Materialen mit einer möglichst effektiven Kombination einzusetzen.

Ein Überblick über neuere Daten und auch künftige Entwicklungsrichtungen auf der Materialseite ist in Stern, S.A., Journal of Membrane Science 94, 1-65 (1994) zu finden. Hier wird eine Vielzahl von Polymeren beschrieben, die als Materialien für selektive Schichten in Trennmembranen dienen können, wie z.B. Polydimethylsiloxan, Celluloseacetat, Polysulfon, Polycarbonat oder Polymethylmethacrylat. Diese Materialien decken einen Bereich von 2 bis 7 für den Trennfaktor Sauerstoff/ Stickstoff ab, die Permeationskoeffizienten für Sauerstoff liegen zwischen 780 und 0,14Barrer.

Unter den Materialien mit hohen Trennfaktoren finden sich auch Polyimide. Aus der Gruppe der Polyimide gibt es lösliche Materialien, mit denen Membranen herstellbar sind und bei denen vergleichsweise günstige Kombinationen von Trennfaktor und Durchlässigkeit gefunden wurden. In DE 3420373 sind Membranen aus Polyetherimid beschrieben. Mit diesen Membranen wird bei akzeptabler Durchlässigkeit ein Trennfaktor von 5,7 (Sauerstoff/Stickstoff) erreicht. Im Einzelfall konnte hiermit auch ein Trennfaktor von 7 erreicht werden, jedoch war die zugehörige Durchlässigkeit mit 0.003 m³/m²hbar äußerst gering.

Es stellt sich somit die Aufgabe eine Membran zur Verfügung zu stellen die gute Trenneigenschaften aufweist und gleichzeitig eine hohe Durchlässigkeit besitzt.

Die vorliegende Erfindung löst diese Aufgabe und betrifft eine Membran mit einer Trennschicht aus einem Polyimid enthaltend 50 bis 100 Gew.% der wiederkehrenden Einheiten (A) 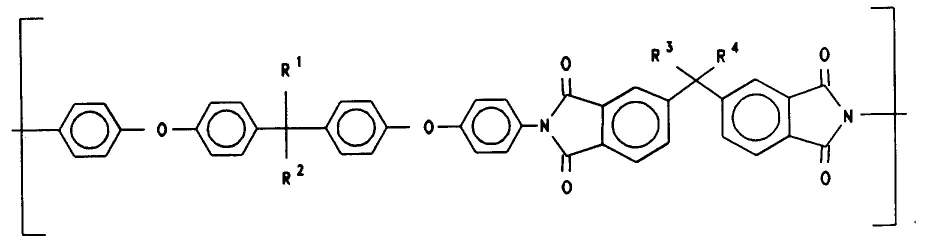 wobei R¹, R², R³ und R⁴ unabhängig voneinander für H oder einen CH₃, CF₃ oder CₙH₂ₙ₊₁-Rest mit n<10 stehen
und
0 bis 50 Gew.% der wiederkehrenden Einheiten (B). 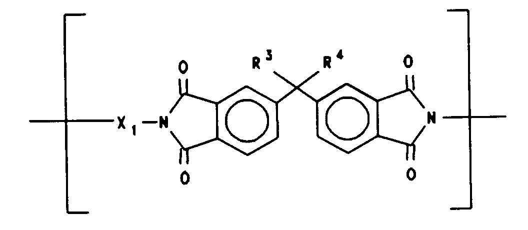 wobei X₁ für m-Phenylen, p-Phenylen oder für eine der folgenden Gruppen steht

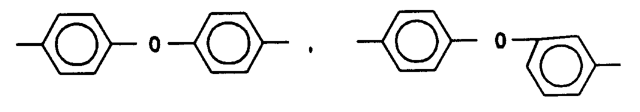

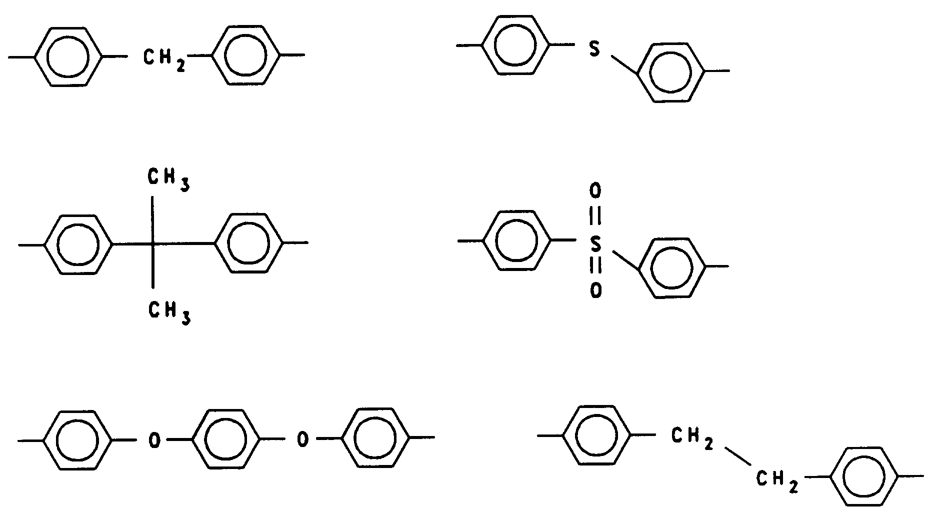

Polyimide der obengenannten Zusammensetzung und ein Verfahren zu ihrer Herstellung werden in EP-A-0 290 910 und EP-A-0 290 909, auf die hiermit ausdrücklich Bezug genommen wird, beschrieben.

Die erfindungsgemäße Membran zeichnet sich gegenüber den im Stand der Technik bekannten Membranen durch gute Trennleistungen bei gleichzeitig hoher Durchlässigkeit aus.

So zeigt die erfindungsgemäße Membran beispielsweise Trennfaktoren für Sauerstoff/ Stickstoff die im Bereich von 5,5 bis 10, insbesondere im Bereich von 6,8 bis 10 liegen. Gleichzeitig werden hohe Durchlässigkeiten erreicht. Die erreichten Durchlässigkeiten für beispielsweise Sauerstoff liegen im Bereich von 5E-3 bis 1 m³/m² h bar, insbesondere von 8E-3 bis 0,2 m³/m² h bar.

Polyimide die sich für die beschriebene Membran eignen sind beispielsweise erhältlich durch Umsetzung von 2,2-Bisphthalsäure-anhydrido-(4)-propan oder dessen Ester-, Amid- oder Säurederivaten mit 2,2-Bis-(4-aminophenoxyphenyl)-propan oder den entsprechenden Acetylverbindungen, Isocyanaten oder Carbaminsäureestern.

Das erfindungsgemäß verwendete Polyimid kann zusätzlich zu den Einheiten der Formeln (A) und (B) noch weitere Diamin- und/oder Säureeinheiten enthalten. Die Trennschichtdicke der erfindungsgemäßen Membran läßt sich im Fall von Kompositmembranen über eine Massenbilanz einfach bestimmen. Sie weist vorzugsweise eine Dicke im Bereich von 3 bis 300 nm auf. Im Falle von naßgefällten integralasymmetrischen Membranen läßt sich nur eine effektive Trennschichtdicke angeben. Diese kann durch Bestimmung der Permeabilität des Materials und der Permeanz der Membran berechnet werden. Insbesondere enthält die Membran eine möglichst dünne Trennschicht, wobei zu beachten ist, daß mechanische Belastbarkeit dieser Schicht abnimmt je dünner diese ist.

Für die Herstellung von Membranen mit hoher Durchlässigkeit, d.h. mit einer dünnen effektiven Trennschicht, kommen verschiedene Verfahren in Frage. Ein Weg ist die Herstellung von Kompositmembranen.

Bei der Herstellung von Kompositmembranen wird eine möglichst dünne Membranschicht auf eine poröse Stützmembran oder eine poröse Stützmembran mit hochpermeabler Zwischenschicht aufgebracht. Eine Möglichkeit zur Herstellung einer solchen dünnen Membranschicht bietet das sogenannte Water-Casting-Verfahren (ältere nicht vorveröffentlichte Deutsche Anmeldung P 44 16 331.2). Hierbei wird eine Lösung des erfindungsgemäß verwendeten Polyimids auf einer Wasseroberfläche gespreitet. Nach dem Verdampfen des Lösungsmittels bildet sich ein ultradünner fester Film, der auf eine poröse Stützmembran oder eine poröse Stützmembran mit hochpermeabler Zwischenschicht auflaminiert werden kann.

Als Stützmembran können mikro- oder nanoporöse Membranen mit möglichst großer Porosität oder auch Gewebe und Vliese verschiedenster Art, z.B. Glasfaser- oder Polyestervliese oder poröse Folien verwendet werden, die mit einem hochpermeablen Polymer beschichtet oder getränkt sein können.

Die Dicke der Stützmembran beträgt vorzugsweise 2 bis 1500 mm.
Die Porengröße liegt, je nach Art des Stützmaterials im Bereich von 0 bis 1000 nm, vorzugsweise ist die Porengröße der jeweiligen Unterlage, auf die die Trennschicht aufgebracht wird, nicht deutlich größer als die 3-fache Dicke der effektiven Trennschicht. Bei einer Übersteigung des oberen Grenzwertes der Porengröße kommt es zu einer Verminderung der Stabilität der effektiven Trennschicht, das heißt die gewünschte Stabilisierung durch die Stützmembran ist nicht mehr gewährleistet.

Als Lösungsmittel zur Herstellung der Kompositmembranen nach dem Water-Casting Verfahren kommen für die als Trennschicht eingesetzten Polyimide solche in Frage, die ein gutes Lösungsvermögen und ein gutes Spreitverhalten zeigen. Es können auch Gemische von Lösungsmitteln verwendet werden. Geeignet sind z. B. Dichlormethan und Chlorbenzol.

Als Subphase für das Water-Casting Verfahren kann man Wasser unterschiedlichster Qualität einsetzen, es kann entmineralisiertes Wasser oder auch normales Leitungswasser verwendet werden. Es können auch verschiedene Zusätze wie z.B. Salze oder Zusätze zur Gefrierpunktserniedrigung zugegeben werden. Beispiele hierfür sind NaCl, KCl oder Ethylenglykol. Durch diese Zusätze läßt sich der Temperaturbereich erweitern und zusätzlich die Oberflächenspannung einstellen.

Die Wassertemperatur liegt insbesondere im Bereich von -10 und +60 °C, bevorzugt im Bereich von 15-50 °C.

Vorteilhaft ist es, wenn man den Film nicht direkt auf einen porösen Träger überträgt. Es wurde festgestellt, daß sich so nur schwer defektfreie Schichten herstellen lassen. Einfacher ist es, wenn man eine glatte, defektfrei Unterstruktur, eine sogenannte Zwischenschicht, beschichtet. Hierzu wird auf den porösen Träger eine Schicht aus einem hochpermeablem Material, z.B. aus Polydimethylsiloxan oder einem Polydimethyldiphenylsiloxan-Copolymer aufgebracht. Ein weiterer Vorteil dieses Membranaufbaus ist die Ausnutzung des Polydimethylsiloxanfilms als gutter-layer zur Verbesserung der Gesamtdurchlässigkeit der Membran.

Bei der Herstellung derartiger Membranen hat es sich als vorteilhaft erwiesen, die Kompositmembran in einer bestimmten Beschichtungsreihenfolge herzustellen. Man beschichtet die poröse Trägermembran beim Eintauchen in das Wasser mit Polydimethylsiloxan oder einem anderen hochpermeablen Material, wobei die dem Wasser zugewandte Grenzfläche nach außen zeigt. Beim Austauchen beschichtet man nun mit dem erfindungsgemäß verwendeten Polyimid. Bei dieser Vorgehensweise findet man eine deutlich bessere Haftung des Filmes.

Zur Erhöhung der mechanischen Stabilität und der Selektivität der Membran hat es sich als vorteilhaft erwiesen die effektive Trennschicht zusätzlich mit einem hochpermeablen Material zu beschichten. Hier kann entweder das gleiche Material wie zur Herstellung der Zwischenschicht verwendet werden oder ein anderes hochpermeables Material. Allgemein kommen für beide Schichten, d.h. für die Zwischenschicht und die Deck- bzw. Schutzschicht, die gleichen Materialien in Frage. Bevorzugt wird die Verwendung von gleichen Materialien für beide Schichten, insbesondere bevorzugt wird die Verwendung von Polydimethylsiloxan.
Andere Möglichkeiten zur Verbesserung der Haftung durch Zusatz entsprechender Hilfsmittel werden in der älteren nicht vorveröffentlichten Deutschen Anmeldung P 44 16 330.4 beschrieben.

Auf diese Weise können mit dem Water-Casting Verfahren die verschiedensten Trägermaterialien und -formen beschichtet werden. Es lassen sich sowohl planare Membranen als auch Hohlfasermembranen mit Einfachschichten oder auch Mehrfachschichten übereinander erzeugen.

Neben dem Water-Casting Verfahren können prinzipiell auch andere Verfahren, wie z.B. Tauchbeschichtung oder Fließerbeschichtung zur Herstellung der Kompositmembranen verwendet werden.

In einer weiteren Ausführungsform können die erfindungsgemäßen Membranen als integralasymmetrische Membranen mit Hilfe des Naßfällverfahrens hergestellt werden. Hierbei wird das membranbildende Polyimidpolymer in einem mit dem Fällmedium mischbaren Lösungsmittel gelöst.

Als Lösungsmittel kommen mit dem Fällmedium mischbare Lösungsmittel wie z.B. N-Methylpyrrolidon, Dimethylformamid, N-Formylpiperidin, Dimethylacetamid oder auch Gemische dieser Lösungsmittel untereinander oder mit anderen untereinander mischbaren Lösungsmittel in denen sich das Polymer löst in Frage.

Weiterhin ist es möglich zusätzlich ein Quellmittel wie z.B. γ-Butyrolacton oder Dimethylsulfoxid hinzuzufügen. Dieses Quellmittel verändert die Dynamik des Fällprozeßes und nimmt somit Einfluß auf die Struktur der Membran.

Der Gehalt an dem erfindungsgemäß verwendeten Polyimidpolymer der Gießlösung liegt im Bereich von 5 bis 50 Gew.%, vorzugsweise im Bereich von 10 bis 30 Gew.%.

Die das Polyimidpolymer enthaltende Lösung wird bei einer Temperatur im Bereich von 0 bis 120 °C, vorzugsweise bei 40 bis 100°C, z.B. mit der Rakeltechnik, dip-coating, Siebdruck oder einer anderen geeigneten Technik, zu einem dünnen Film ausgestrichen. Das Ausstreichen kann auf einer glatten Unterlage, z.B. Glas- oder Metallplatten erfolgen. Für eine mechanische Verstärkung der Membran kann es vorteilhaft sein, die Lösung auf einem Stütz- oder Verstärkungsmaterial auszustreichen. Hierfür geeignet sind mikro- oder nanoporöse Membranen mit möglichst großer Porosität oder auch Gewebe und Vliese verschiedenster Art, z.B. Glasfaser- oder Polyestervliese oder poröse Folien.

Anschließend wird dieser Film in einem Fällmittel (Nichtlösungsmittel für das Polyimid) ausgefällt.

Als Fällmittel können beispielsweise Wasser, Aceton, Salzlösungen oder Gemische dieser Komponenten verwendet werden. Das Ausfällen geschieht vorzugsweise bei Zimmertemperatur. In einigen Fällen erweist sich ein Kühlen der Reaktionslösung als vorteilhaft. Weiterhin ist es aber auch möglich das Polymer bei erhöhter Temperatur auszufällen.
Auf diese Weise kann durch geeignete Wahl der Temperatur die Dynamik des Fällprozesses und somit die Struktur der Membran beeinflußt werden.

Nach einer Verweilzeit im Fällbad, die wenige Minuten bis zu mehreren Tagen betragen kann, wird die Membran bei einer Temperatur im Bereich von 10 °C bis 150 °C, vorzugsweise bei 40 °C bis 80°C, getrocknet.

Mit diesem Naßfäll-Verfahren ist es möglich eine Membran mit einem porösen Unterbau und einer sehr dünnen, dichten nahezu porenfreien Haut aus dem gleichen Material zu erzeugen, die auch als integralasymmetrische Membran bezeichnet wird.

Die Membranen können direkt auf ein Stützmaterial gegossen oder ohne Stützschicht hergestellt werden. Als Trägermaterialien können mikro- oder nanoporöse Membranen mit möglichst großer Porosität oder auch Gewebe und Vliese verschiedenster Art, z.B. Glasfaser- oder Polyestervliese oder poröse Folien verwendet werden.

Auf diese Weise kann man nach dem Naßfällverfahren auch integralasymmetrische Hohlfasermembranen herstellen. Hierbei wird die erfindungsgemäße Polymerlösung, wie es dem Fachmann bekannt ist, mit Hilfe einer Ringdüse versponnen und danach in das Fällmedium gebracht.

Die Herstellung der erfindungsgemäßen Membranen ist nicht an ein bestimmtes Modulkonzept gebunden. Es können Membranen für Platten- und Wickelmodule und außerdem Hohlfasern gefertigt werden.

Die erfindungsgemäßen Membranen eignen sich insbesondere zur Gastrennung, zur Pervaporation, Umkehrosmose oder Elektrodialyse.

Die Erfindung wird durch die folgenden Beispiele näher erläutert:

### Beispiel 1:

Zu einer Lösung aus 1ml OH-term. Polydimethylsiloxan und 5ml Butylacetat werden 0,3ml einer 50%igen Methyltriacetoxysilanlösung in Butylacetat und 0.1ml einer 5%igen Dibutylzinndilauratlösung in Butylacetat gegeben. 50 µl dieser Lösung werden auf eine Wasseroberfläche (300cm²) gespreitet. Nach 1min. bei 20°C Wassertemperatur wird der Film auf der Wasseroberfläche zäh-elastisch. Anschließend wird er auf einen Träger (®Celgard 2400) übertragen. In einem weiteren Beschichtungsvorgang wird die Membran mit 6HDA-BAB beschichtet. Dazu wird eine Lösung aus 50mg 6HDA-BAB in 1ml Chlorbenzol und 4 ml Dichlormethan bereitet. Davon werden 50µl auf eine Wasseroberfläche (300cm²) bei einer Temperatur von 20° C gespreitet. Nach Verdampfen des Lösungsmittels wird der Film auf die Membran übertragen. Die anschließende Permeanzmessung und Trennfaktorbestimmung dieser Kompositmembran ergibt eine Sauerstoffpermeanz von 0.05 m³(STP)/m² h bar und einen Trennfaktor von 7.6 Sauerstoff zu Stickstoff.

### Beispiel 2:

Zu einer Lösung aus 1ml OH-term. Polydimethylsiloxan und 5ml Butylacetat werden 0,3ml einer 50%igen Methyltriacetoxysilanlösung in Butylacetat und 0.1ml einer 5%igen Dibutylzinndilauratlösung in Butylacetat gegeben. 50 µl dieser Lösung werden auf eine Wasseroberfläche (300cm²) gespreitet. Nach 1min. bei 30°C Wassertemperatur wird der Film auf der Wasseroberfläche zähelastisch. Anschließend wird er auf einen Träger (Celgard 2400) übertragen. In einem weiteren Beschichtungsvorgang wird die Membran mit 6HDA-BAB beschichtet. Dazu wird eine Lösung aus 50mg 6HDA-BAB in 1ml Chlorbenzol und 4 ml Dichlormethan bereitet. Davon werden 50µl auf eine Wasseroberfläche (300cm²) bei einer Temperatur von 30° C gespreitet. Nach Verdampfen des Lösungsmittels wird der Film auf die Membran übertragen.
Als Schutzschicht wird nun in einem letzten Beschichtungsvorgang eine Polydimethylsiloxan auf die Membran übertragen und bei 50°C 30min. im Trockenschrank getrocknet. Die anschließende Permeanzmessung und Trennfaktorbe stimmung dieser Kompositmembran ergibt eine Sauerstoffpermeanz von 0.05m³(STP)/m² h bar und einen Trennfaktor von 7.6 Sauerstoff zu Stickstoff.

### Beispiel 3:

Auf eine heiße Glasplatte (Temp.: ^{∼}100°C) wird eine Lösung aus 20 Gew.-% 6HDA-BAB und N-Methylpyrrolidon (NMP) zu einem Film von 220µm Naßfilmdicke ausgezogen. Nach kurzer Verweilzeit (ca. 5s) wird der Film in einem Wasserbad von 20°C ausgefällt. In diesem Wasserbad verbleibt der Film ca. 24h und wird anschließend an Luft getrocknet.
Die so erhaltene Membran wird nun in einem weiteren Schritt mit einem Silikonfilm beschichtet. Hierzu werden zu einer Lösung aus 1ml OH-term. Polydimethylsiloxan und 5ml Butylacetat 0,3ml einer 50%igen Methyltriacetoxysilanlösung in Butylacetat und 0.1ml einer 5%igen Dibutylzinndilauratlösung in Butylacetat gegeben. 200 µl dieser Lösung werden auf eine Wasseroberfläche (300cm², 30°C) gespreitet. Nach 1min. wird er auf die Membran übertragen und bei 50°C 30min. im Trockenschrank getrocknet. Die anschließende Permeanzmessung und Trennfaktorbestimmung dieser Membran ergibt eine Sauerstoffpermeanz von 0.02-0.03 m³(STP)/m² h bar und einen Trennfaktor von 7.5-8 Sauerstoff zu Stickstoff.

### Beispiel 4:

Auf eine Glasplatte wird eine Lösung aus 20 Gew.-% 6HDA-BAB und N-Methylpyrrolidon (NMP) zu einem Film von 220µm Naßfilmdicke ausgezogen. Nach kurzer Verweilzeit (ca. 5s) wird der Film in einem Wasserbad von ^{∼}2°C ausgefällt. Nach ca. 5min bringt man die Membran in ein Wasserbad von 20°C. Hierin verbleibt der Film ca. 24h und wird anschließend bei 50°C im Trockenschrank getrocknet.
Die so erhaltene Membran wird nun in einem weiteren Schritt mit einem Silikonfilm beschichtet. Hierzu werden zu einer Lösung aus 1ml OH-term. Polydimethylsiloxan und 5ml Butylacetat 0,3ml einer 50%igen Methyltriacetoxysilanlösung in Butylacetat und 0.1ml einer 5%igen Dibutylzinndilauratlösung in Butylacetat gegeben. 200 µl dieser Lösung werden auf eine Wasseroberfläche (300cm², 30°C) gespreitet. Nach 1min. wird er auf die Membran übertragen und bei 50°C 30min. im Trockenschrank getrocknet. Die anschließende Permeanzmessung und Trennfaktorbestimmung dieser Membran ergibt eine Sauerstoffpermeanz von 0.02-0.03 m³(STP)/m² h bar und einen Trennfaktor von 7.5-8 Sauerstoff zu Stickstoff.

## Patentansprüche

1. Membran mit einer Trennschicht aus einem Polyimid, dadurch gekennzeichnet, daß das Polyimid
50 bis 100 Gew.% der wiederkehrenden Einheiten (A)
(Achtung: Formel mit Hand korrigier) 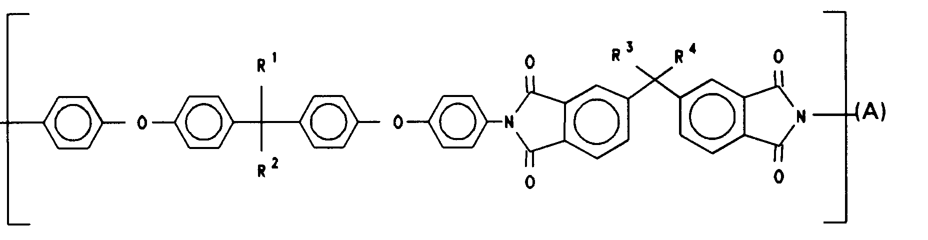 wobei R¹, R², R³ und R⁴ unabhängig voneinander für H oder einen CH₃, CF₃ oder CₙH₂ₙ₊₁-Rest stehen mit n<10
und
0 bis 50 Gew.% der wiederkehrenden Einheiten (B) 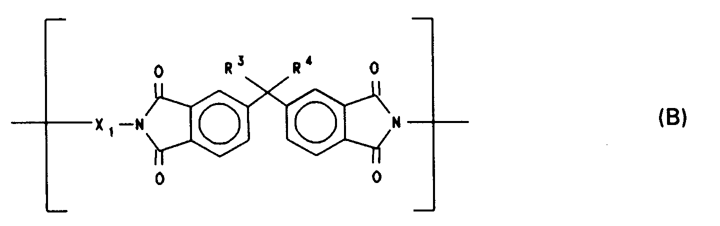 wobei X₁ für m-Phenylen, p-Phenylen oder für eine der folgenden gruppen steht 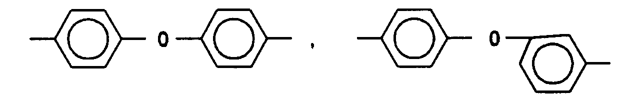 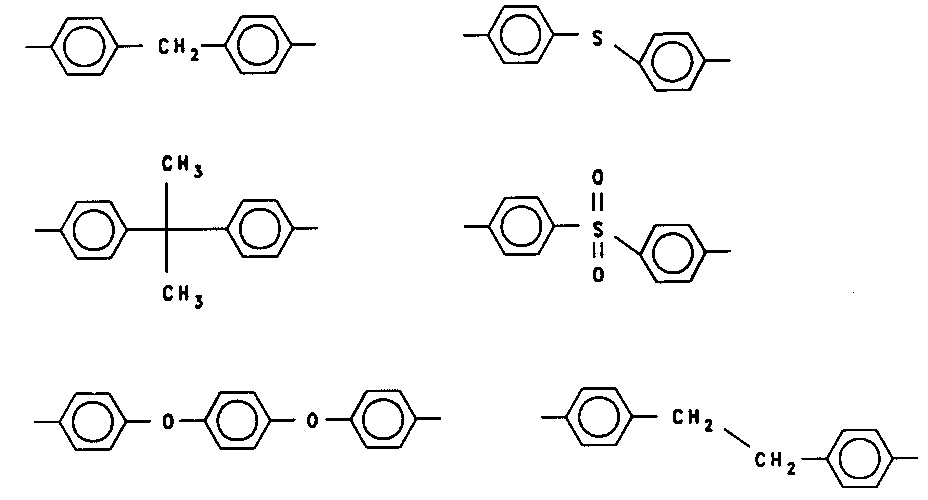 enthält.

2. Membran nach Anspruch 1, dadurch gekennzeichnet, daß sie zusätzlich zu den Einheiten der Formeln (A) und (B) weitere Diamin- und/oder Säureeinheiten enthält.

3. Membran nach Anspruch 1, dadurch gekennzeichnet, daß die Trennschichtdicke im Bereich von 3 bis 300 nm liegt.

4. Membran nach Anspruch 1, dadurch gekennzeichnet, daß die Membran aus einer Trennschicht, einer defektfreien hochpermeablen Zwischenschicht und einer Trägerschicht besteht.

5. Membran nach Anspruch 4, dadurch gekennzeichnet, daß die Zwischenschicht aus einem Polydimethylsiloxan besteht.

6. Membran nach Anspruch 1, dadurch gekennzeichnet, daß der Trennfaktor Sauerstoff/Stickstoff im Bereich von 5,5 bis 10 liegt.

7. Membran nach Anspruch 1, dadurch gekennzeichnet, daß sie eine Durchlässigkeit für Sauerstoff im Bereich von 5E-3 bis 1 m³/m² h bar besitzt.

8. Membran nach Anspruch 1, dadurch gekennzeichnet, daß die effektive Trennschicht mit einer Deckschicht überzogen ist.

9. Membran nach Anspruch 8, dadurch gekennzeichnet, daß die Deckschicht ein Polydimethylsiloxan enthält.

10. Membran nach mindestens einem der Ansprüche 1 bis 9, dadurch gekennzeichnet, daß sie integralasymetrisch ist.

11. Membran nach Anspruch 10, dadurch gekennzeichnet, daß es eine Flachmembran ist.

12. Membran nach Anspruch 10, dadurch gekennzeichnet, daß es eine Hohlfasermembran ist.

13. Membran nach mindestens einem der Ansprüche 1 bis 9, dadurch gekennzeichnet, daß es eine Kompositmembran ist und mindestens eine Schicht auf einem Trägermaterial enthält.

14. Verwendung von Polyimid-Harzen, hergestellt durch Umsetzung von 2,2-Bisphthalsäure-anhydrido-(4)-propan oder dessen Ester-, Amid- oder Säurederivaten mit 2,2-Bis-(4-aminophenoxyphenyl)-propan oder den entsprechenden Acetylverbindungen oder Isocyanaten oder Carbaminsäurestern in einem mit Wasser mischbaren Lösemittel zur Herstellung von Membranen.

15. Verwendung von Polyimidharzen nach Anspruch 14, dadurch gekennzeichnet, daß die Membranen eine Durchlässigkeit für Sauerstoff im Bereich von 5E-3 bis 1 m³/m² h bar besitzen.

16. Verwendung der Membran nach Anspruch 1 für die Gastrennung, Pervaporation, Umkehrosmose oder Elektrodialyse.
